# EUROPÄISCHE PATENTANMELDUNG

(11) **EP 2 862 541 A2**
(43) Veröffentlichungstag der Anmeldung: **22.04.2015**
(21) Anmeldenummer: 14194032.0
(22) Anmeldetag: 05.03.2014
(51) Int. Cl.: A61C 13/08, A61C 13/00

(54) **Verfahren und Vorrichtung zur Herstellung eines Zahnersatzteils**

(30) Priorität: 05.03.2013 DE 102013203750
(62) Teilanmeldung aus: 14157753.6
(71) Anmelder: Sirona Dental Systems GmbH, 64625 Bensheim (DE)
(72) Erfinder: Saliger, Günter, 64625 Bensheim (DE)
(74) Vertreter: Sommer, Peter

(57) **Zusammenfassung**

Das Verfahren zur Herstellung eines Zahnersatzteils umfasst das Bereitstellen (11) eines Datensatzes (2) eines Zahnersatzteils (6) zur Verwendung in einem CAD/CAM-Verfahren, das Bereitstellen (12) von Referenzdaten (3) optischer Eigenschaften unterschiedlicher Dentinmaterialien und transluzenter Schmelzmaterialien des Zahnersatzteils (6) und einer Beziehung (4) zwischen diesen optischen Eigenschaften, gewünschten optischen Eigenschaften und Abmessungen des Zahnersatzteils (6), das Bestimmen (13) eines ersten Sollwertes (S₁) der optischen Eigenschaften eines Dentinbereiches, das Bestimmen (14) eines zweiten Sollwertes (S₂) der optischen Eigenschaften eines Schmelzbereiches, das Bestimmen (15) eines dritten Sollwertes (S₃) einer Dicke des Schmelzbereiches jeweils des Zahnersatzteils (6), das Auswählen und Bereitstellen (16) eines Zahnersatzformblocks (5), welcher einen Dentinbereich aus einem Material aufweist.

## Beschreibung

### Technisches Gebiet

Die vorliegende Erfindung betrifft ein Verfahren zur Herstellung eines Zahnersatzteils. Weiterhin betrifft die vorliegende Erfindung ein Computerprogramm, das alle Schritte des erfindungsgemäßen Verfahrens ausführt, wenn es auf einem Rechengerät abläuft, sowie einen Datenträger, der dieses Computerprogramm speichert. Schließlich betrifft die Erfindung ein Dentales CAD/CAM-System, welches zur Durchführung des erfindungsgemäßen Verfahrens ausgebildet ist.

### Stand der Technik

Die menschlichen Zähne besitzen hinsichtlich ihrer Farbe eine gewisse natürliche Vielfalt. Neben individuellen Aspekten spielen für deren Farbe Genetik, Alter, Ernährungsgewohnheiten und Tabakkonsum eine wesentliche Rolle. In der Zahntechnik haben sich verschiedene Beschreibungen für die Farben von menschlichen Zähnen herausgebildet. Hauptsächlich sind hier die VITA Klassikfarben und die VITA 3D-Masterfarben zu nennen. Zu jeder am Markt befindlichen Farbsystematik gehören Farbmusterzähne, die der Zahnarzt nutzen kann, um unmittelbar im Patientenmund durch einen direkten Vergleich mit den benachbarten Zähnen eine Festlegung der Zahnfarbe des benötigten Zahnersatzes zu treffen. In den letzten Jahren sind zudem eine Reihe von Geräten entwickelt worden, die unter anderem durch eine spektroskopische Analyse des von einem Zahn reflektierten Lichts eine Bestimmung der Zahnfarbe erlauben. Vorzugsweise geben diese Geräte ihre Messwerte gleich in der vom Anwender gewünschten Farbsystematik an. Der Zahntechniker, der nun die Aufgabe hat, einen gewünschten Zahnersatz herzustellen nutzt hierzu im Regelfall die Farbangaben des Zahnarztes, die nach den oben beschriebenen Methoden ermittelt wurden. Zahntechniker stellen keramische Restaurationen durch eine Schichtung von Keramikmassen her, die hinsichtlich Farbe und Opazität unterschiedlich sind. Die Grundlage ihrer Arbeit bilden Gerüste aus Metall oder Keramik. Die Zahntechniker erzielen die vom Zahnarzt gewünschte Farbe mithilfe von Rezepturen, die Hersteller dieser Verblend- und Schichtmassen aufgestellt haben. Diese Rezepturen beschreiben im Wesentlichen welche Schichtung der Zahntechniker mit welchen Verblendmassen auszuführen hat, um eine vom Zahnarzt gewünschte Farbe zu erzielen. Daneben nutzt der Zahntechniker seine Erfahrung und sein Geschick, um die Form und das Aussehen der Zähne weiter zu analysieren.

Die Herstellung von ästhetisch ansprechendem Zahnersatz mittels CAD/CAM-Verfahren (Computer Assisted Design/Computer Assisted Manufacturing) unter Verwendung vorgefertigter Rohlinge gestaltet sich schwierig, insbesondere wenn es um Frontzahnrestaurationen geht. Zwar ermöglichen automatisierte CAD/CAM-Verfahren eine hohe gleichbleibende Qualität und Passgenauigkeit des Zahnersatzes bei gleichzeitig günstigen Preisen. Um jedoch dem Vorbild natürlicher Zähne möglichst nahezukommen und ästhetischen Anforderungen, insbesondere hinsichtlich der Farbgebung zu entsprechen, wird oftmals eine Größen- bzw. Farbvariation des aus einem Formblock gefrästen Zahnersatzteils notwendig. Hierzu sind aus dem Stand der Technik mehrfarbige Kunststoffformkörper mit vorgegebenen variierenden Farbschichten, welche um einen Kern angeordnet sind, zur Verwendung in der Herstellung als Zahnersatz bekannt. Ein Nachteil dieser Formkörper ergibt sich unter anderem daraus, dass zur Herstellung einer passgenauen Zahnkrone bei gegebenem Stumpf dieser mit genügend Dentinmaterial abgedeckt werden muss, um eine natürlich Farbwirkung zu erzielen.

In CAD/CAM-Geräten werden industriell vorgefertigte Blöcke verwendet. Diese Blöcke waren anfänglich einfarbig und erzeugten lediglich durch ihre hohe Transluzenz einen für den Seitenzahnbereich hinreichenden Farbeindruck durch den sogenannten Chamäleoneffekt. Frontzahnkronen und Veneers wurden zur Verbesserung der Ästhetik hintermalt. In der Nachfolge wurden in ebenen Lagen angeordnete mehrfarbige Blöcke entwickelt, um für den Frontzahnbereich bessere Lösungen offerieren zu können. Inzwischen ist man auch in der Lage, die Grenzflächen zwischen den einzelnen Werkstoffschichten als gekrümmte Flächen auszubilden. Wenn nun der Zahnarzt in Analogie zur klassischen Farbnahme einen Block der entsprechende Farben an einen Nachbarzahn hält, um die erforderliche Farbe zu ermitteln, erlebt er regelmäßig, dass die Farbe der fertigen Restauration wenig mit der ursprünglichen Blockfarbe zu tun hat. Dieser Effekt erklärt sich zum einen aus der Schichtstärkenabhängigkeit der Farbe von Dentalkeramiken und zum anderen aus der hohen Transluzenz der Keramiken, aufgrund derer beispielsweise der Zahnstumpf durchscheinen kann, so dass die resultierende Farbe verfälscht wird.

Der vorliegenden Erfindung liegt daher die Aufgabe zugrunde, ein Verfahren bereitzustellen, welches eine einfache, kostengünstige Größen- und Farbvariation eines herzustellenden Zahnersatzteils gestattet.

### Darstellung der Erfindung

Diese Aufgabe wird durch das erfindungsgemäße Verfahren zur Herstellung eines Zahnersatzteils gelöst. Dieses Verfahren umfasst das Bereitstellen eines Datensatzes eines Zahnersatzteils zur Verwendung in einem CAD/CAM-Verfahren, das Bereitstellen von Referenzdaten optischer Eigenschaften unterschiedlicher Dentinmaterialien und transluzenter Schmelzmaterialien des Zahnersatzteils und einer Beziehung zwischen diesen optischen Eigenschaften, gewünschten optischen Eigenschaften des Zahnersatzteils und Abmessungen des Zahnersatzteils, das Bestimmen eines ersten Sollwertes der optischen Eigenschaften eines Dentinbereiches des Zahnersatzteils, das Bestimmen eines zweiten Sollwertes der optischen Eigenschaften eines Schmelzbereiches des Zahnersatzteils, das Bestimmen eines dritten Sollwertes einer Dicke des Schmelzbereiches des Zahnersatzteils, das Auswählen und Bereitstellen eines Zahnersatzformblocks, welcher einen Dentinbereich aufweist, der aus einem Material besteht, dessen optische Eigenschaften dem ersten Sollwert entsprechen und einen Schmelzbereich aufweist, der aus einem transluzenten Material besteht, dessen optische Eigenschaften dem zweiten Sollwert entsprechen und in den der Dentinbereich unter Ausbildung einer Grenzfläche eingebettet ist, wobei die Grenzfläche zumindest eine erste Dentinfläche und eine zweite Dentinfläche aufweist, das Auswählen zumindest einer Dentinfläche und das Herstellen eines Zahnersatzteils nach dem CAD/CAM-Verfahren mittels Materialabtragung aus dem Zahnersatzformblock wobei die Dicke des transluzenten Materials parallel der ausgewählten Dentinfläche auf den dritten Sollwert verringert wird. Die Auswahl des Zahnersatzformblocks erfolgt insbesondere aus einem vordefinierten Sortiment von Zahnersatzformblöcken.

Bevorzugt umfassen die optischen Eigenschaften des Dentinmaterials unterschiedliche Farbwerte. Weiterhin ist es bevorzugt, dass die optischen Eigenschaften des transluzenten Materials unterschiedliche Transluzenzwerte umfassen. Die Erfindung geht davon aus, dass nur die unmittelbar sichtbaren Flächen eines Zahns eine hinreichend gute Ästhetik erhalten müssen. Im Frontzahnbereich sind das die Labial- und im Seitenzahnbereich die Okklusailflächen der Zähne. Die anderen Flächen spielen bei dem erfindungsgemäßen Verfahren eine untergeordnete Rolle.

Die Beziehung ist vorzugsweise eine funktionale Beziehung und/oder eine empirische Beziehung. Weiterhin ist es bevorzugt, dass der erste Sollwert, der zweite Sollwert und der dritte Sollwert in Abhängigkeit von optischen Eigenschaften von Zähnen ausgewählt werden, wobei das Zahnersatzteil dazu vorgesehen ist, benachbart zu diesen Zähnen in einem Kiefer angeordnet zu werden. Hierbei wird berücksichtigt, dass die Farbe von Verblendkeramiken von deren Schichtstärke abhängt. Der zugrunde liegende Effekt ist in der Physik als Rayleigh-Streuung bekannt. In dem erfindungsgemäßen Verfahren kann nun die Schichtdickenabhängigkeit der einhüllenden Schmelzmassen in Verbindung mit der Farbe der inneren Strukturen des Zahnersatzformblocks berücksichtigt werden, um aus einem vorhandenen Sortiment von Zahnersatzformblöcken einen geeigneten Block auszuwählen.

Das erfindungsgemäße Verfahren kommt in Verbindung mit Zahnersatzformblöcken zur Anwendung, die eine innere Struktur und hinsichtlich der Form, der Farbe und der Transluzenz Eigenschaften von natürlichen Zähnen aufweisen. Diese inneren Strukturen sind von einer weiteren Masse umhüllt, die hinsichtlich Farbe und Transluzenz den Eigenschaften von natürlichem Zahnschmelz nahekommt. Dabei ist es bevorzugt, dass das Material des Dentinbereiches und das Material des Schmelzbereiches jeweils unabhängig voneinander aus der Gruppe bestehend aus Keramikwerkstoffen und Acrylaten ausgewählt sind. Es ist besonders bevorzugt, dass der Dentinbereich und der Schmelzbereich aus demselben Material bestehen. Weiterhin ist es bevorzugt, dass der Dentinbereich und der Schmelzbereich eine unterschiedliche Pigmentierung aufweisen. Dabei moduliert der Schmelzbereich die Farbwahrnehmung durch unterschiedlich ausgeprägte Transparenz und insbesondere Dicke. Die Farbwirkung ergibt sich jedoch überwiegend aus der Dentinfarbe.

Der Dentinbereich ist vorzugsweise auf eine Dentinbasisfläche aufgesetzt, wobei die Dentinbasisfläche die gesamte Basisfläche des Zahnersatzformblocks bildet.

Die Dentinflächen sind vorzugsweise gekrümmte Flächen, die in approximaler Richtung einen gemeinsamen Schnittbereich, besonders bevorzugt eine gemeinsame Schnittlinie bilden. Weiter ist es bevorzugt, dass die erste Dentinfläche und die zweite Dentinfläche gegenüberliegende Flächen des Dentinbereiches ausbilden. So lässt sich beispielsweise aus zwei verschiedenen entgegengesetzten Richtungen des Zahnersatzformblocks wahlweise ein verschieden großes bzw. verschieden farbiges Zahnersatzteil herstellen, wobei die resultierenden Labialflächen vorzugsweise einem Schneide- und/oder Eckzahn zuordenbar sind bzw. die resultierenden Okklusialflächen vorzugsweise einem Seitenzahn zuordenbar sind. Das Profil der ersten und zweiten Dentinfläche weist über die gesamte Fläche eine schwach konvexe Krümmung auf und verjüngt sich zum Zahnhals oder zur Zahnspitze hin. Die gaumenseitige Fläche, d.h. die Palatinalfläche des so erstellbaren Zahnersatzteils ist mehr oder weniger tief ausgehöhlt und schneidet gegebenenfalls zumindest teilweise den Dentinbereich, jedoch ist dieser Teil nach außen nicht sichtbar.

Bevorzugt wird das transluzente Material derart abgetragen, dass die Farbe des resultierenden Zahnersatzteils durch die gewählte Dentinfläche und die Schichtdicke des Schmelzbereiches bestimmt wird. Dabei kann die erforderliche Schichtdicke des Schmelzbereiches erheblich von der anatomischen Schmelzschichtdicke abweichen.

Das Zahnersatzteil ist insbesondere eine Krone oder ein Veneer für einen Frontzahn oder einen Eckzahn. Hierbei kommen die vorteilhaften optischen Eigenschaften des mit dem erfindungsgemäßen Verfahren erzeugen Zahnersatzteils besonders zur Geltung. Der erste Sollwert (S₁), der zweite Sollwert (S₂), und der dritten Sollwert (S₃) werden hierbei insbesondere nur bezüglich der Labialfläche des Frontzahns oder Eckzahns bestimmt. Sofern geeignete Dentinformen vorliegen kann das erfindungsgemäß hergestellte Zahnersatzteil jedoch grundsätzlich an jeder beliebigen Position im Kiefer eingesetzt werden. Wenn das Zahnersatzteil eine Krone oder ein Veneer für einen Seitenzahn ist werden der erste Sollwert, der zweite Sollwert, und der dritte Sollwert insbesondere nur bezüglich der Okklusalfläche des Seitenzahns bestimmt.

Die Erfindung betrifft weiterhin ein Computerprogramm, das alle Schritte des erfindungsgemäßen Verfahrens ausführt, wenn es auf einem Rechengerät abläuft. Dies ermöglicht es, ohne bauliche Veränderungen daran vornehmen zu müssen, durch Aufspielen des Computerprogramms ein dentales CAD/CAM-System zu erhalten, das dazu eingerichtet ist, das erfindungsgemäße Verfahren auszuführen. Das Computerprogramm kann erfindungsgemäß auf einem Datenträger gespeichert sein.

### Kurze Beschreibung der Zeichnungen

Ausführungsbeispiele der Erfindung sind in den Zeichnungen dargestellt und in der folgenden Beschreibung näher erläutert.

Fig. 1 zeigt ein Ablaufschema eines Verfahrens gemäß einer Ausführungsform der Erfindung.

In Fig. 2 ist ein Zahnersatzformblock dargestellt, welcher in einem Verfahren gemäß einer Ausführungsform der Erfindung verwendet wird.

Fig. 3a zeigt in einem a-b-Diagramm die Schichtdickenabhängigkeit von A2-Farbwerten mittels einer Ausführungsform des erfindungsgemäßen Verfahrens herstellbarer Zahnersatzteile.

Fig. 3b zeigt in einem a-L-Diagramm die Schichtdickenabhängigkeit von A2-Farbwerten mittels einer Ausführungsform des erfindungsgemäßen Verfahrens herstellbarer Zahnersatzteile.

Fig. 3c zeigt in einem b-L-Diagramm die Schichtdickenabhängigkeit von A2-Farbwerten mittels einer Ausführungsform des erfindungsgemäßen Verfahrens herstellbarer Zahnersatzteile.

### Ausführungsbeispiele

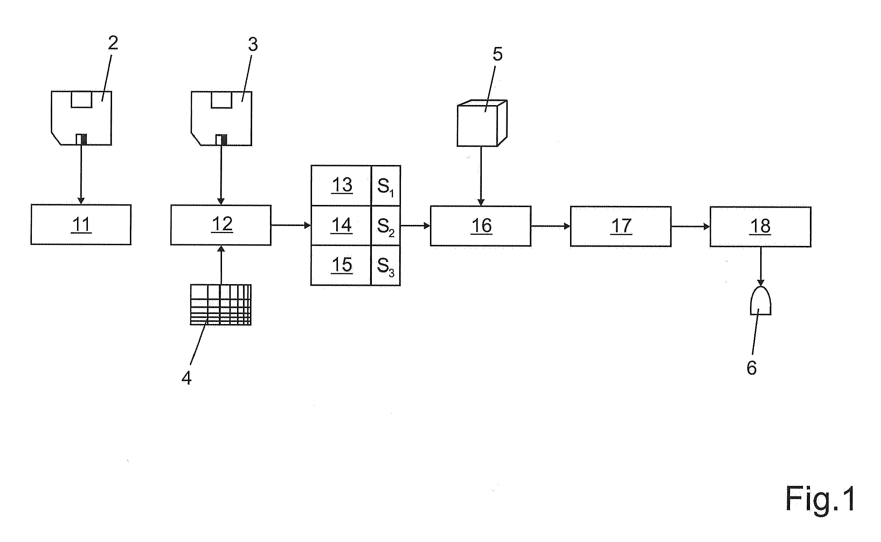

In einer beispielhaften Ausführungsform des erfindungsgemäßen Verfahrens, deren Ablauf in Fig. 1 dargestellt ist, wird in einem ersten Verfahrensschritt 11 ein Datensatz 2 eines herzustellenden Zahnersatzteils 6 zur Verwendung in einem CAD/CAM-Verfahren bereitgestellt, welcher beispielsweise von einem Zahnarzt unter Verwendung einer intraoralen Kamera aufgenommen wurde (beispielsweise CEREC AC Bluecam oder Omnicam der Anmelderin). Dazu wird das zu versorgende Areal des Kiefers nach der Herstellung einer Präparation in seiner topografischen Gestalt abgetastet. Dies kann unmittelbar und direkt geschehen oder es kann mithilfe eines Positiv- oder Negativabdrucks dieses Gebietes indirekt erfolgen. Danach wird in der CAD/CAM-Software mithilfe bekannter Verfahren eine Modellation des erforderlichen Zahnersatzteils 6 durchgeführt. Weiterhin erfolgt eine Bereitstellung 12 von Referenzdaten 3 optischer Eigenschaften unterschiedlicher verfügbarer Dentinmaterialien und transluzenter Schmelzmaterialien des Zahnersatzteils 6 und einer Beziehung 4 zwischen diesen optischen Eigenschaften, gewünschten optischen Eigenschaften des Zahnersatzteils 6 und Abmessungen des Zahnersatzteils 6. Die Referenzdaten 3 werden vom Hersteller eines Zahnersatzformblocks 5 bereitgestellt. Die Beziehung 4 kann als funktionale Beziehung oder als empirische Beziehung in einer Software hinterlegt sein.

Der Anwender wählt die gewünschte Farbe aus, in der das Zahnersatzteil 6 gefertigt werden soll. Dies kann er unter Umständen für verschiedene Bereiche der Sichtfläche getrennt durchführen. Er kann zusätzliche Merkmale, wie beispielsweise eine generelle Opazität des Zahnersatzteils 6 angeben, die das Aussehen der Zähne beeinflussen. Hierzu erfolgt eine Bestimmung 13 eines ersten Sollwertes S₁ der optischen Eigenschaften eines Dentinbereiches und eine Bestimmung 14 eines zweiten Sollwertes S₂ der optischen Eigenschaften eines Schmelzbereiches des Zahnersatzteils 6 sowie eine Bestimmung 15 eines dritten Sollwertes S₃ einer Dicke des Schmelzbereiches des Zahnersatzteils 6.

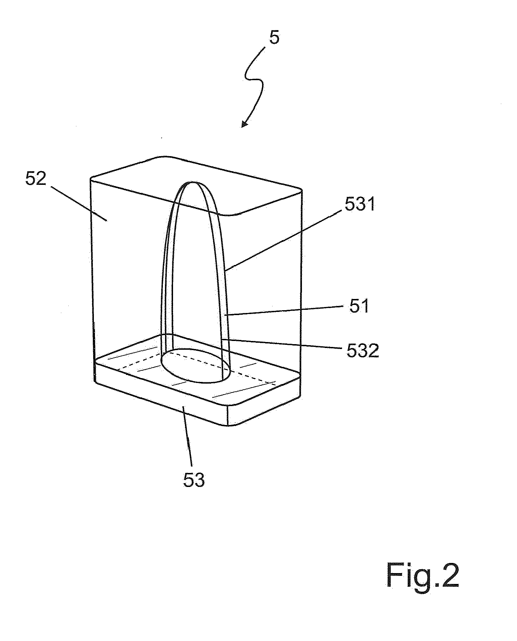

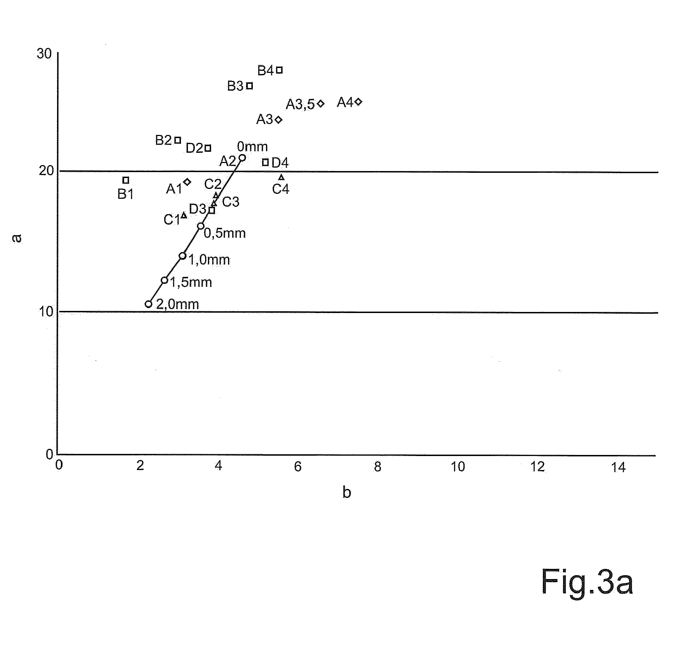

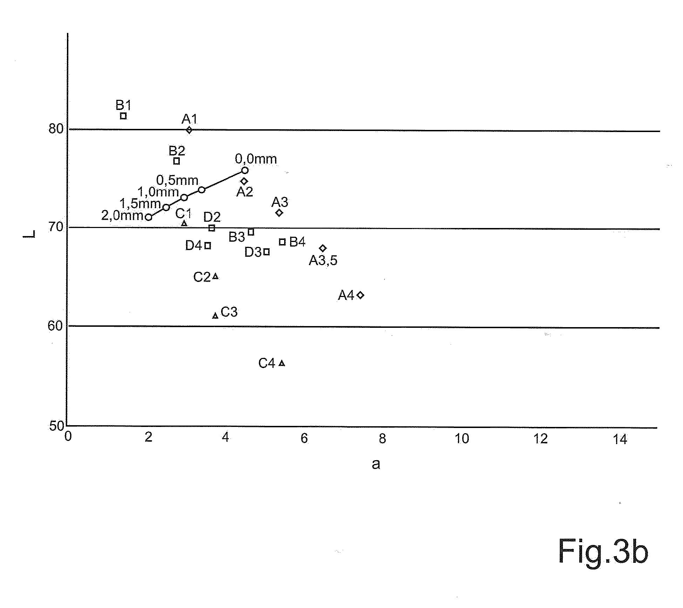

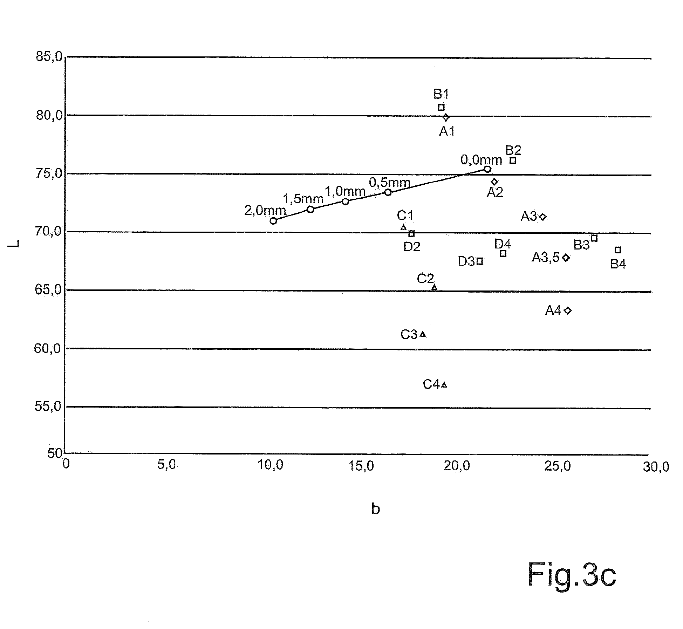

Es wird ein Sortiment von Zahnersatzformblöcken 5 definiert, das hinsichtlich der inneren Dentinstruktur und der Schmelzfarben auf den beabsichtigen Anwendungsfall zugeschnitten ist. Dabei wird zunächst diejenige innere Struktur ausgewählt, deren Sichtfläche bezüglich Größe, Form und Flächenkrümmung dem herzustellenden Zahnersatzteil 6 am ähnlichsten ist. Auf der Basis der vom Zahnarzt gewünschten Farbe wird derjenige Block aus dem Sortiment vorgeschlagen, der die bestmögliche Ästhetik realisiert. Dadurch erfolgt eine Bereitstellung 16 eines Zahnersatzformblocks 5, welcher in Fig. 2 dargestellt ist. Dieser weist einen Dentinbereich 51 auf, der aus einem Material besteht, dessen optische Eigenschaft dem ersten Sollwert S₁ entsprechen. Weiterhin weist er einen Schmelzbereich 52 auf, der aus einem transluzenten Material besteht, dessen optische Eigenschaften dem zweiten Sollwert S₂ entsprechen und in dem der Dentinbereich 51 unter Ausbildung einer Grenzfläche eingebettet ist. Der Dentinbereich 51 und der Schmelzbereich 52 können beispielsweise aus einem identischen Keramikwerkstoff bestehen, wobei die Transluzenz des Schmelzbereichs 52 und eine Opazität des Dentinbereichs 51 durch eine unterschiedliche Pigmentierung dieser beiden Bereiche 51, 52 erreicht wird. Der Dentinbereich 51 ist auf einer Dentinbasisfläche 54 aufgesetzt, welcher die gesamte Basisfläche des Zahnersatzformblocks 5 bildet. Die Grenzfläche weist eine erste Dentinfläche 531 und eine zweite Dentinfläche 532 auf. Diese Dentinflächen 531, 532 sind konvex gekrümmte Flächen, die in approximaler Richtung einen gemeinsamen Schnittbereich bilden. In Abhängigkeit von der gewünschten Form und Farbe des Zahnersatzteils 6 erfolgt eine Auswahl 16 zumindest einer Dentinfläche 531, 532. Die Sichtfläche der Restauration wird gegen die Dentinfläche 531, 532 des Zahnersatzformblocks 5 geneigt, parallel oder senkrecht dazu verschoben, bis die vorgegebenen Farben bestmöglich erreicht sind. Das Herstellen 17 des Zahnersatzteils 6 erfolgt dann schließlich nach dem CAD/CAM-Verfahren mittels Abtragung des transluzenten Materials an der ausgewählten Dentinfläche 531, wobei dessen Dicke auf den dritten Sollwert S₃ verringert wird. Hierzu wird ein dentales CAD/CAM-System (beispielsweise CEREC AC + MC XL der Anmelderin) verwendet, auf welchem eine Ausführungsform des erfindungsgemäßen Verfahrens als Computerprogramm implementiert ist. In den Fig. 3a - 3c wird gezeigt, welche VITA-Farben im Lab-Farbraum gemäß EN ISO 11664-4 mit einem beispielhaften Dentinkern erzeugt werden können, der aus der Sichtrichtung einen 0 - 2,0 Millimeter dicken Schmelzbereich 52 trägt. Fig. 3a zeigt dabei einen a-b-Schnitt durch den Lab-Farbraum, Fig. 3b zeigt einen a-L-Schnitt und Fig. 3c zeigt einen b-L-Schnitt. Die A2-Farben sind in Schichtdickenstufen des Schmelzbereichs von je 0,5 Millimeter dargestellt. Ein Vergleich mit den Positionen der ebenfalls in den Fig. 3a - 3c dargestellten Dentalfarben A1 - A4, B1 - B4, C1 - C4 und D1 - D4 zeigt, dass das erfindungsgemäße Verfahren die Herstellung von Zahnersatzteilen 6 ermöglicht, deren Farbe jener natürlicher Zähne gleicht.

Das erhaltene Zahnersatzteil 6 kann beispielsweise als Krone oder als Veneer für einen Frontzahn, einen Eckzahn oder einen Seitenzahn verwendet werden.

## Patentansprüche

1. Verfahren zur Herstellung eines Zahnersatzteils (6), umfassend:
- Bereitstellen (11) eines Datensatzes (2) eines Zahnersatzteils (6) zur Verwendung in einem CAD/CAM-Verfahren,
- Bereitstellen (12) von Referenzdaten (3) optischer Eigenschaften unterschiedlicher Dentinmaterialien und transluzenter Schmelzmaterialien des Zahnersatzteils (6) und einer Beziehung (4) zwischen diesen optischen Eigenschaften, gewünschten optischen Eigenschaften des Zahnersatzteils (6) und Abmessungen des Zahnersatzteils (6),
- Bestimmen (13) eines ersten Sollwertes (S₁) der optischen Eigenschaften eines Dentinbereiches des Zahnersatzteils (6),
- Bestimmen (14) eines zweiten Sollwertes (S₂) der optischen Eigenschaften eines Schmelzbereiches des Zahnersatzteils (6),
- Bestimmen (15) eines dritten Sollwertes (S₃) einer Dicke des Schmelzbereiches des Zahnersatzteils (6),
- Auswählen und Bereitstellen (16) eines Zahnersatzformblocks (5), welcher
i) einen Dentinbereich (51) aufweist, der aus einem Material besteht, dessen optische Eigenschaften dem ersten Sollwert (S₁) entsprechen, und
ii) einen Schmelzbereich (52) aufweist, der aus einem transluzenten Material besteht, dessen optische Eigenschaften dem zweiten Sollwert (S₂) entsprechen und in den der Dentinbereich (51) unter Ausbildung einer Grenzfläche eingebettet ist,
wobei die Grenzfläche zumindest eine erste Dentinfläche (531) und eine zweite Dentinfläche (532) aufweist,
- Auswählen (16) zumindest einer Dentinfläche (531, 532), und
- Herstellen (17) eines Zahnersatzteils (6) nach dem CAD/CAM-Verfahren mittels Materialabtragung aus dem Zahnersatzformblock (5), wobei die Dicke des transluzenten Materials parallel zu der ausgewählten Dentinfläche (531, 532) auf den dritten Sollwert (S₃) verringert wird.

2. Verfahren nach Anspruch 1, **dadurch gekennzeichnet, dass** die optischen Eigenschaften des Dentinmaterials unterschiedliche Farbwerte umfassen.

3. Verfahren nach Anspruch 1 oder 2, **dadurch gekennzeichnet, dass** die optischen Eigenschaften des transluzenten Materials unterschiedliche Transluzenzwerte umfassen.

4. Verfahren nach einem der Ansprüche 1 bis 3, **dadurch gekennzeichnet, dass** die Beziehung (4) eine funktionale Beziehung und/oder eine empirische Beziehung ist.

5. Verfahren nach einem der Ansprüche 1 bis 4, **dadurch gekennzeichnet, dass** der erste Sollwert (S₁), der zweite Sollwert (S₂) und der dritte Sollwert (S₃) in Abhängigkeit von optischen Eigenschaften von Zähnen ausgewählt werden, wobei das Zahnersatzteil (6) dazu vorgesehen ist, benachbart zu diesen Zähnen in einem Kiefer angeordnet zu werden.

6. Verfahren nach einem der Ansprüche 1 bis 5, **dadurch gekennzeichnet, dass** das Material des Dentinbereiches (51) und das Material des Schmelzbereiches (52) jeweils unabhängig voneinander ausgewählt sind aus der Gruppe, bestehend aus Keramikwerkstoffen und Acrylaten.

7. Verfahren nach Anspruch 6, **dadurch gekennzeichnet, dass** der Dentinbereich (51) und der Schmelzbereich (52) aus demselben Material bestehen.

8. Verfahren nach einem der Ansprüche 1 bis 7, **dadurch gekennzeichnet, dass** der Dentinbereich (51) und der Schmelzbereich (52) eine unterschiedliche Pigmentierung aufweisen.

9. Verfahren nach einem der Ansprüche 1 bis 8, **dadurch gekennzeichnet, dass** der Dentinbereich (51) auf einer Dentinbasisfläche (54) aufgesetzt ist, wobei die Dentinbasisfläche (54) die gesamte Basisfläche des Zahnersatzformblocks (5) bildet.

10. Verfahren nach einem der Ansprüche 1 bis 9, **dadurch gekennzeichnet, dass** die Dentinflächen (531, 532) gekrümmte Flächen sind, die in approximaler Richtung einen gemeinsamen Schnittbereich bilden.

11. Verfahren nach einem der Ansprüche 1 bis 10, **dadurch gekennzeichnet, dass** das transluzente Material derart abgetragen wird, dass die Farbe des resultierenden Zahnersatzteils (6) durch die gewählte Dentinfläche (531, 532) und die Schichtdicke des Schmelzbereiches (52) bestimmt wird.

12. Verfahren nach einem der Ansprüche 1 bis 11, **dadurch gekennzeichnet, dass** das Zahnersatzteil (6) eine Krone oder ein Veneer für einen Frontzahn oder einen Eckzahn ist, wobei der erste Sollwert (S₁), der zweite Sollwert (S₂), und der dritte Sollwert (S₃) nur bezüglich der Labialfläche des Frontzahns oder Eckzahns bestimmt werden.

13. Verfahren nach einem der Ansprüche 1 bis 11, **dadurch gekennzeichnet, dass** das Zahnersatzteil (6) eine Krone oder ein Veneer für einen Seitenzahn ist, wobei der erste Sollwert (S₁), der zweite Sollwert (S₂), und der dritte Sollwert (S₃) nur bezüglich der Okklusalfläche des Seitenzahns bestimmt werden.

14. Computerprogramm, das alle Schritte eines Verfahrens nach einem der Ansprüche 1 bis 13 ausführt, wenn es auf einem Rechengerät abläuft.

15. Datenträger, **dadurch gekennzeichnet, dass** er ein Computerprogramm nach Anspruch 14 speichert.

16. Dentales CAD/CAM-System, **dadurch gekennzeichnet, dass** es eingerichtet ist, um ein Verfahren nach einem der Ansprüche 1 bis 13 auszuführen.
